Europäisches Patentamt

European Patent Office

Office européen des brevets

(11) Veröffentlichungsnummer: **0 149 037 B1**

# (12) EUROPÄISCHE PATENTSCHRIFT

(45) Veröffentlichungstag der Patentschrift: **17.04.91**

(21) Anmeldenummer: **84113231.9**

(22) Anmeldetag: **03.11.84**

(51) Int. Cl.5: **G06F 3/13**, G06K 15/22, B43L 13/02

(54) **Verfahren zum Erstellen von Entwürfen unter Verwendung eines intelligenten Reissbrettes und Reissbrett zum Durchführen dieses Verfahrens.**

(30) Priorität: **03.11.83 DE 3339757**

(43) Veröffentlichungstag der Anmeldung:
**24.07.85 Patentblatt 85/30**

(45) Bekanntmachung des Hinweises auf die
Patenterteilung:
**17.04.91 Patentblatt 91/16**

(84) Benannte Vertragsstaaten:
**AT BE CH DE FR GB IT LI LU NL SE**

(56) Entgegenhaltungen:
**DE-A- 2 712 150**
**DE-A- 3 129 470**
**US-A- 3 873 769**

(73) Patentinhaber: **König, Reinhard, Dr.**
**Franz-Xaver-Höll-Strasse 7**
**W-7505 Ettlingen(DE)**

(72) Erfinder: **König, Reinhard, Dr.**
**Franz-Xaver-Höll-Strasse 7**
**W-7505 Ettlingen(DE)**

(74) Vertreter: **Geitz, Heinrich, Dr.-Ing.**
**Postfach 2708 Kaiserstrasse 156**
**W-7500 Karlsruhe 1(DE)**

Rank Xerox (UK) Business Services

**Beschreibung**

Die Erfindung betrifft ein Verfahren zum Erstellen von Entwürfen unter Verwendung eines intelligenten Reißbrettes mit einer Zeichenmaschine, einer transparenten Zeichenplatte, einer Zeichenfläche, einem Plotter, einem Stift, einem Meßsystem und einem Rechner sowie gegebenenfalls einem Bildschirm, ferner ein intelligentes Reißbrett zum Durchführen dieses Verfahrens. Derartige Reißbretter können insbesondere als Eingabemittel für diverse CAD-Systeme benutzt werden.

Bei CAD-Systemen sind als Eingabemittel Bildschirme bekannt, auf denen mittels einer Tastatur, eines Joy-Sticks, eines Lichtgriffels oder anderer geeigneter Vorrichtungen schrittweise zeichnerische Darstellungen aufgebaut werden können. Ein wesentlicher Nachteil besteht dabei in den begrenzten Bildschirmformaten, die es nicht erlauben, in den gewohnten Maßstäben zu konstruieren. Notwendig wirkt sich dies auf die Qualität eines Entwurfs negativ aus.

Ein weiterer Nachteil besteht darin, daß die Informationsmenge begrenzt ist, die sich aufgrund zu geringer Bildschirmauflösung zur Darstellung bringen läßt. Ein Reißbrett derjenigen Art, auf das sich die Erfindung bezieht, stellt etwa zwei Zehnerpotenzen mehr Punkte dar als die besten Rasterbildschirme. Die bekannten Eingabeeinrichtungen eignen sich gut dazu, etwas nachzuvollziehen, sind aber für eigentliche Entwurfsarbeiten nur bedingt brauchbar.

Es sind auch schon Reißbretter bekannt geworden, bei denen unter dem Zeichenpapier ein großformatiges Digitalisierbrett angeordnet ist. Mittels eines elektronischen Stiftes läßt sich bei so aufgebauten Reißbrettern die zurückgelegte Wegstrecke des Stiftes digitalisieren und speichern. Dabei entsteht in einem zugeordneten Rechner ein relativ intelligentes Pixelbild, das sich jedoch nicht, wie bei der bekannten CAD-Technik üblich, weiterverarbeiten läßt. Die besondere Unzulänglichkeit derartiger Reißbretter besteht jedoch darin, daß im Verlaufe einer Zeichnungserstellung auftretende Zeichenfehler sich addieren können, so daß die letztlich gewonnene rechnerinterne Darstellung nicht maßhaltig ist.

In Verbindung mit Reißbrettern dieser Art ist es auch schon bekannt geworden, der Zeichenfläche einen verfahrbaren Plotter zuzuordnen. Unbefriedigend dabei ist jedoch, daß während des Plottens die Konstruktionsarbeiten unterbrochen werden müssen und andererseits in den Zeiträumen, in denen konstruiert wird, nicht geplottet werden kann.

Es ist auch schon ein Verfahren zum Erstellen von Zeichnungen bekannt (US-A-3 873 769), bei dem mittels eines Stylus Zeichnungselemente ausgewählt und plaziert werden, so daß nach und nach der Aufbau einer Zeichnung durch sinnvolles Aneinanderfügen vorgegebener Zeichnungselemente gelingt. Dieses Verfahren, bei dem es sich um eine kommandoorientierte Vorgehensweise handelt, bedient sich einer Vorrichtung mit einer als Display ausgebildeten transparenten Platte, einem Meßsystem zum Aufnehmen der mittels des Stylus auf einer Arbeitsfläche plazierten Zeichnungselemente und einem hinter der Platte angeordneten Plotter zum Darstellen der Zeichnungselemente auf einem hinter dem Display aufgenommenen Trägerpapier. Das Display umfaßt eine Arbeitsfläche und eine Trägerplatte sowie ein zwischen diesen aufgenommenes Digitalisiergitter. Da das Trägerpapier, auf das die mittels des Stylus auf einem Keyboard ausgewählten und auf der Arbeitsplatte plazierten Zeichnungselemente rückseitig aufgeplottet werden, eine beträchtliche Dicke aufweist, ist die geplottete Darstellung für einen vor der Arbeitsfläche stehenden Benutzer notwendig mit beträchtlichen Parallaxenfehlern behaftet.

Vor diesem Hintergrund besteht die der Erfindung zugrundeliegende Aufgabe in der Schaffung einerseits eines gegenüber dem Stande der Technik verbesserten Verfahrens zum Erstellen von Entwürfen unter Verwendung eines intelligenten Reißbrettes und andererseits eines die Verfahrensdurchführung ermöglichenden intelligenten Reißbrettes, bei dem ein Benutzer in ge wohnter Weise auf einer herkömmlichen Zeichenfläche arbeitet und die durch bekanntes Skizzieren bzw. per Hand eingeschriebenen Daten erfaßt sowie mittels einer Ploteinrichtung, oder auch eines großflächigen Displays, den jeweils eingegebenen bzw. eingeschriebenen Daten entsprechende exakte Darstellungen auf der Zeichenfläche sichtbar gemacht werden, so daß jeweils von den exakten Darstellungen ausgehend eine Weiterentwicklung der Entwürfe gelingt.

Hinsichtlich des zu schaffenden Verfahrens ist die gestellte Aufgabe dadurch gelöst, daß beim Entwerfen einer Skizze mittels des Stiftes auf der Vorderseite der von einem plan auf der transparenten Zeichenplatte (2) aufgenommenen zeichnungstragenden Medium, wie Transparentpapier, gebildeten Zeichenfläche die Spur des Stiftes von dem Meßsystem aufgenommen und an den eine rechnerinterne Darstellung der Skizze erzeugenden Rechner weitergeleitet sowie die rechnerinterne Darstellung der Skizze mittels eines von dem Plotter erzeugten Plottstrahls von rückwärts auf der Rückseite der Zeichenfläche aufgeplottet wird und durch diese hindurch ohne merkbare Parallaxe neben der durch den Stift auf der Vorderseite der Zeichenfläche erzeugte Skizze von vorn sichtbar ist.

Während bei dem Verfahren nach der vorgenannten US-A-3 873 769 lediglich auf einem Keyboard auswählbare Zeichnungselemente auf einer Arbeitsfläche plaziert, also vorgegebene Zeichnungselemente additiv zu einer Zeichnung zusammengesetzt werden, ermöglicht das Verfahren nach der Erfindung kreatives Konstruieren in der den Konstrukteuren geläufigen Arbeitsweise. Gemäß der Erfindung wird eine Skizze in herkömmlicher Weise vom Konstrukteur durch zeichnerische Entwicklung auf der Zeichenfläche (Zeichenpapier) entworfen, die mittels Rechner interpretiert und dann in eine exakte Zeichnung umgesetzt sowie durch rückseitiges Aufplotten auf die Zeichenfläche durch diese hindurch sichtbar gemacht wird.

Kennzeichnend für das erfindungsgemäße Verfahren ist somit, daß in Abhängigkeit von der jeweiligen Eingabe, etwa einer mit Ungenauigkeiten behafteten Skizze, eine exakte rechnerinterne Darstellung erzeugt und letztere exakt auf der Zeichenfläche abgebildet wird, und daß die Weiterentwicklung einer Konstruktion von dieser exakten Darstellung ausgeht, um dann ebenfalls in eine exakte rechnerinterne Darstellung umgesetzt und auf der Zeichenfläche abgebildet zu werden. Indem unvermeidbar ungenaue Eingaben jeweils durch einen Rechner korrigiert werden und somit jede Weiterentwicklung einer Konstruktion auf einer exakten rechnerinternen Darstellung der vorhergehenden Konstruktionselemente aufbaut, ermöglicht das erfindungsgemäße Verfahren die Erstellung exakter Entwürfe, bei denen die Möglichkeit von Fehleradditionen ausgeschlossen ist. Bei herkömmlichen Verfahren hingegen wird jeweils nur eine der geforderten Darstellung analoge Darstellung abgebildet mit der Folge, daß jede Weiterentwicklung nicht von einer exakten Darstellung, sondern von einem derartigen Analogon und mithin auch von den letzteren anhaftenden Fehlern ausgeht, was zu einer nicht einschätzbaren Fehleraddition führen kann.

In vorrichtungstechnischer Hinsicht ist die Erfindungsaufgabe dadurch gelöst, daß ein aus einer Zeichenmaschine, einer transparenten Zeichenplatte, einer Zeichenfläche, einem Plotter, einem Stift, einem Meßsystem und einem Rechner sowie ggf. einem Bildschirm bestehendes intelligentes Reißbrett zum Durchführen des erfindungsgemäßen Verfahrens geschaffen worden ist, bei dem sich der Plotter, vom Betrachter aus gesehen, in an sich bekannter Weise hinter der von einem Zeichnungstragenden Medium gebildeten Zeichenfläche, die plan auf der dem Benutzer zugewandten Seite der Zeichenplatte aufliegt, befindet und der Plotstrahl von hinten gegen die Zeichenfläche gerichtet ist, so daß ein Plot auf der Rückseite der Zeichenfläche ohne merkbare Parallaxe neben der durch den Stift auf der Vorderseite der Zeichenfläche erzeugten Skizze liegt und von vorn sichtbar ist, und daß die Wirkorgane, wie Entriegelungstasten, Stift, Menüfeld, Plotter und dgl., über das Meßsystem und den Rechner logisch miteinander verbunden sind.

Bei einem so ausgebildeten Reißbrett wird die Spur des Zeichenstiftes vom Meßsystem, bei dem es sich um ein an sich bekanntes Bilderkennungssystem handeln kann, aufgenommen und mittels des hinter der Zeichenplatte angeordneten Plotters eine vom Rechner erzeugte exakte Darstellung des skizzierten Bildes auf der Zeichenfläche sichtbar gemacht, die dann Grundlage für die Weiterentwicklung einer Konstruktion ist, wobei jeder Schritt einer derartigen Weiterentwicklung in gleicher Weise in eine exakte rechnerinterne Darstellung umgesetzt und auf der Zeichenfläche sichtbar gemacht wird. Demgemäß geht jede Weiterentwicklung von einer exakten Darstellung des vorhergehenden Entwicklungsschrittes aus.

Ein besonderer Vorteil des erfindungsgemäßen Verfahrens und des der Verfahrensdurchführung dienenden Reißbrettes besteht darin, daß ein die Erfindung benutzender Konstrukteur in gewohnter Weise arbeiten kann und im Gegensatz zu vorbekannten Systemen keinerlei Einflüsse vorhanden sind, die das Form- und Dimensionierungsempfinden eines Benutzers beeinträchtigen könnten.

Eine zweckmäßige Ausgestaltung der Erfindung sieht vor, daß die Zeichenmaschine ein Linial mit je einem x- und y-Schenkel besitzt, die eine den Ursprung eines temporären Koordinatensystems darstellende Ecke bilden. Angesichts dieser Eckausbildung gelingt das präzise Anfahren beliebiger Punkte auf der Zeichenfläche.

Neben einem Zeichenkopf können drei Meßsysteme bekannter Art für die Erfassung von Winkellagen sowie x- und y-Koordinaten vorgesehen sein. Aktuelle Werte können über Displays dargestellt werden, wobei auch Informationen zur Darstellung kommen, die mit dem Stift aus dem Skizzenblatt gepickt werden.

Eine andere Ausgestaltung sieht vor, daß zur Feinpositionierung einer durch den Stift ausgewählten Lage drei Hilfsantriebe vorhanden sind, die innerhalb eines bestimmten Fangkreises die jeweilige Position anfahren und fixieren. Die Hilfsantriebe wirken auf die x- und y-Koordinaten und die Winkellage.

Zweckmäßigerweise bestehen die Hilfsantriebe aus einer Motor-Getriebe-Kupplungskombination, wobei vorzugsweise Scheibenläufermotoren eingesetzt werden und die Bewegung über eine Ritzel-Zahnstangenkombination übertragen wird, die alternativ auch als Reibrad-Reifflächenkombination ausgebildet sein kann. Zum Sichern der jeweils erreichten Position dient eine Bremse. Die Sicherung kann auch über Entriegelungstasten beeinflußt werden.

Eine weitere wichtige Ausgestaltung sieht vor, daß am Rande der Zeichenplatte, vorzugsweise auf deren rechter Seite, ein Menüfeld mit einem dynamischen Teil aus einem berührungsempfindlichen graphischen Bildschirm angeordnet ist.

Im Menüfeld sind wichtige Befehle abgelegt, etwa in der für die zum Einsatz kommenden CAD-Software erforderlichen Weise. Der dynamische Teil des Menüfeldes läuft auf dem berührungsempfindlichen Bildschirm ab, so daß mittels des Stiftes jeder gewünschte Befehl ausgelöst werden kann.

Die Zeichenplatte stellt das mechanisch feste Bauteil des Reißbrettes dar, auf dem sich die Zeichenfläche befindet. Diese Zeichenfläche besteht aus strahlungsdurchlässigem Material, so daß ein von dem hinter der Zeichenfläche angeordneten Plotter ausgesandter Plotstrahl durch die Zeichenplatte hindurch in der Zeichenfläche einen wahrnehmbaren Farbumschlag zu erzeugen vermag.

Ebenfalls im Rahmen der Erfindung kann der Zeichenplatte auch in an sich bekannter Weise ein Digitalisiergitter zugeordnet sein. Um eine negative Beeinflussung des Strahlenganges zu verhindern, müssen die Oberflächen eben ausgebildet sein.

Bei Verwendung sehr energiereicher Strahlung kann der Zeichenplattenkörper auch eine strahlungsundurchlässige, jedoch gut wärmeleitende Schicht besitzen, so daß die Reaktion einer auf der Schutzschicht aufgenommenen thermoempfindlichen Zeichenfläche gewährleistet ist.

Bei Verwendung eines Digitalisiergitters als Meßsystem ist zweckmäßigerweise die für elektromagnetische Wellen hoher Frequenz undurchdringliche Schutzschicht auf der vom Plotter abgewandten Seite mit Kanälen versehen und in letzteren ist das Digitalisiergitter aufgenommen.

Im Rahmen der Erfindung können thermoempfindliche Präparationen auch ohne weitere Trägermaterialien direkt auf die Zeichenplatte aufgebracht werden. Bei einer derartigen Ausgestaltung kann die Zeichenplatte eine rauhe Oberfläche aufweisen, die eine zusätzliche Streuung des durchdringenden Plotstrahls erzeugt, so daß die Intensität des Plotstrahls auf ein für einen Benutzer ungefährliches Maß abgesenkt wird.

Um die Zeichenfläche, die im allgemeinen papier- oder folienartigen Charakter hat, problemlos befestigen zu können, ist die Zeichenplatte gemäß einer weiteren Ausgestaltung der Erfindung geringfügig einachsig gekrümmt. Durch diese Maßnahme ist ein enges Anliegen der Zeichenfläche an der leicht konvexen Zeichenplatte gewährleistet.

Gemäß einer anderen Ausgestaltung kann die Zeichenplatte auch ihrer dem Betrachter zugewandten Seite auch direkt eine Zeichenfläche tragen, die einen farbstoffartigen Charakter mit einer strahlungsempfindlichen, Präparation aufweist. Diese Präparation kann entfernbar oder auch ergänzbar sein.

Eine wiederum andere Ausgestaltung sieht vor, daß die Zeichenfläche aus einem Trägermaterial besteht, das mit einer strahlungsempfindlichen Substanz präpariert ist.

Um den Wirkungsgrad der Energieumsetzung zu verbessern, kann die Zeichenfläche, in Plotstrahlrichtung gesehen, auch mit einer absorbierenden Schicht und danach mit einer thermoempfindlichen Schicht versehen sein. Die genannten beiden Schichten können auch durch das Trägermaterial getrennt sein. Wesentlich ist jedoch, daß in Plotstrahlrichtung zunächst die absorbierende und dann die strahlungsempfindliche Schicht angeordnet ist.

Im Rahmen der Erfindung kann die Anordnung jedoch auch so getroffen sein, daß vom Plotstrahl zuerst das Trägermaterial, dann die absorbierende Schicht und zuletzt die thermoempfindliche Schicht durchdrungen wird.

Wenn die strahlungsempfindliche Präparation eine photoempfindliche Schicht direkt entwickelnder Art ist, so ist diese photoempfindliche Schicht in Strahlrichtung gesehen vor dem folienartig ausgebildeten Trägermaterial angeordnet. Das folienartige Trägermaterial wirkt dann gleichzeitig für die Umgebungsstrahlung des Raumes als Filter, insbesondere als Gelbfilter.

Zweckmäßigerweise ist die Oberfläche der Zeichenfläche mattiert auszubilden.

Um nach der Lehre der Erfindung arbeiten zu können, muß die Bahn des Stiftes vermessen werden. Insoweit sieht neben dem Digitalisiergitter eine Ausgestaltung der Erfindung die Verwendung eines an sich bekannten akustisch arbeitenden Meßsystems mit mehreren Mikrophonen vor, wobei wenigstens ein Mikrophon mit der beweglichen Zeichenmaschine verbunden ist. Dadurch ist sichergestellt, daß ein Tonsignal eines dann einzusetzenden, an sich bekannten akustischen Stiftes optimal empfangen wird.

Eine andere Ausgestaltung der Erfindung ist durch die Verwendung eines optischen Meßsystems mit einer Kamera und einem leuchtenden Stift gekennzeichnet, der eine mit der Präparation der Zeichenfläche nicht reagierende Lichtart aussendet. Dieser optische Stift emittiert an seiner Spitze einen Lichtpunkt, der von der Kamera des optischen Meßsystems erfaßt wird.

Bei höchsten Auflösungen genügt es, wenn die Kamera eine Teilfläche um die Stiftspitze herumerfaßt. Die Teilfläche folgt der Stiftspitze in ihren Bewegungen grob und die wahre Position wird errechnet.

Für bestimmte Prüfoperationen sieht eine weitere Ausgestaltung der Erfindung vor, daß der Plotkopf neben einem Plotstrahl einen nicht mit der Präparation reagierenden Markierungsstrahl aussendet.

Eine andere Ausgestaltung der Erfindung ist dadurch gekennzeichnet, daß als Lichtquelle eine UV-Strahlenquelle dient und daß diese Lichtquelle auf dem Plotkopf angeordnet ist. Anstelle einer UV-Strahlenquelle können als Lichtquelle auch Laserdioden dienen, die dann gleichfalls auf dem Plotkopf angeordnet sind, und zwar so, daß die von den Laserdioden ausgehenden Strahlen in einem Fokus zusammenlaufen, der in der Nähe der strahlungsempfindlichen Schicht der Zeichenfläche liegt. Bei der Verwendung von Laserdioden haben sich zum Führen der Strahlen als Spiegel ausgebildete Strahlführungsmittel als zweckmäßig erwiesen.

Im Rahmen der Erfindung können energiereiche Laserstrahlen jedoch auch über Spiegel oder Lichtleitkabel an den Plotkopf geleitet werden.

Bei Verwendung leistungstarker Laserstrahlen mit stark divergierender Strahlgeometrie muß die präzise Lagerung der Optik zur Zeichenplatte gewährleistet sein. Dies kann erfindungsgemäß dadurch erreicht werden, daß die Optik des Plotkopfs gegenüber dem Zeichenplatten körper luftgelagert ist, was eine definierte Lage der Optik zur Zeichenplatte und damit eine exakte Fokussierung in der Zeichenfläche sicherstellt.

Mit dem durch die Erfindung geschaffenen intelligenten Reißbrett ist es möglich, mit einem Stift auf der Zeichenfläche eine Skizze samt zugehörigen alphanumerischen Informationen zu erzeugen, wobei parallel eine rechnerinterne Darstellung errechnet wird, deren für den Arbeitsfortschritt relevante Daten, bei denen es sich insbesondere um geometrische Daten handelt, über einen Plotter auf der Zeichenfläche ausgegeben werden. Für den Benutzer eines derartigen Reißbrettes sind somit die Skizze und ein dieser Skizze entsprechender korrekter Plot ohne merkbare Parallaxe sichtbar.

Anhand der beigefügten Zeichnungen sollen nachstehend einige Ausführungsbeispiele der Erfindung erläutert werden. In schematischen Ansichten zeigen:

Fig. 1
ein erfindungsgemäßes Reißbrett in einer Gesamtansicht,
Fig. 2
eine Detailansicht der Zeichenmaschine des Reißbrettes,
Fig. 3
die Ausbildung eines Hilfsantriebs,
Fig. 4
in einer perspektivischen Darstellung die Zeichenplatte mit der auf letzterer aufgenommenen Zeichenfläche und dem in die Zeichenplatte integrierten Meßsystem sowie mit dem zugeordneten Plotter und einem nur angedeuteten Zeichenstift,
Fig. 5
einen Schnitt durch eine mögliche Ausgestaltung der Zeichenplatte mit einer ein in Kanälen aufgenommenes Digitalisiergitter aufweisenden Schutzschicht,

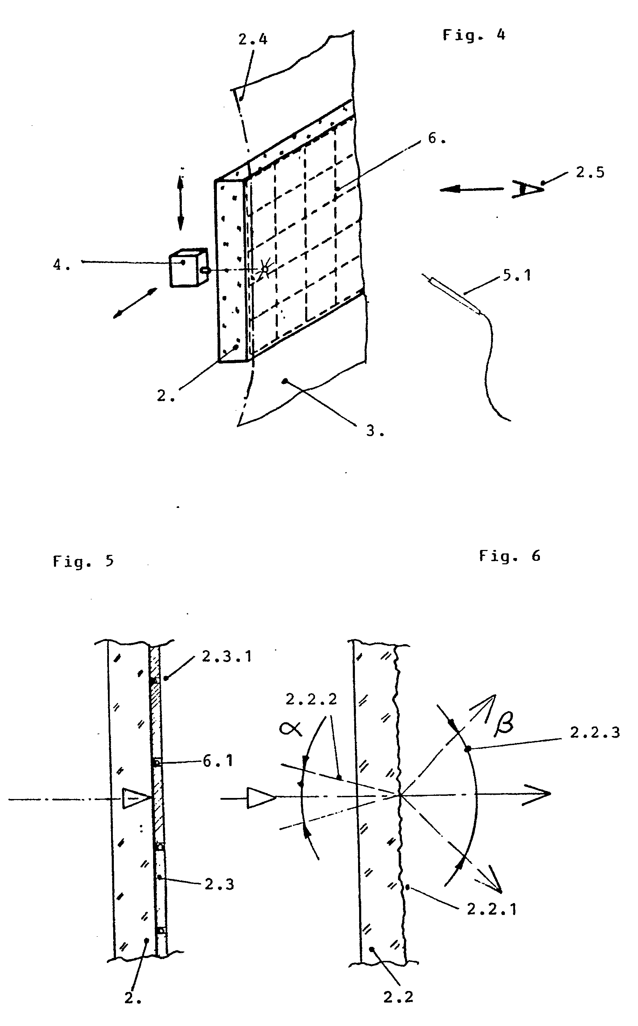

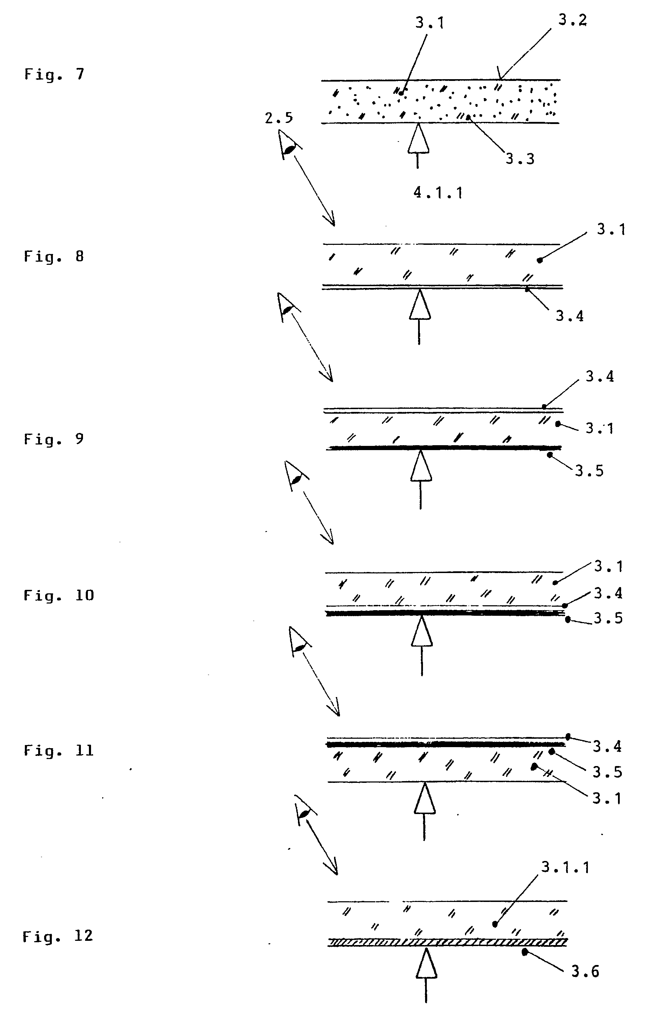

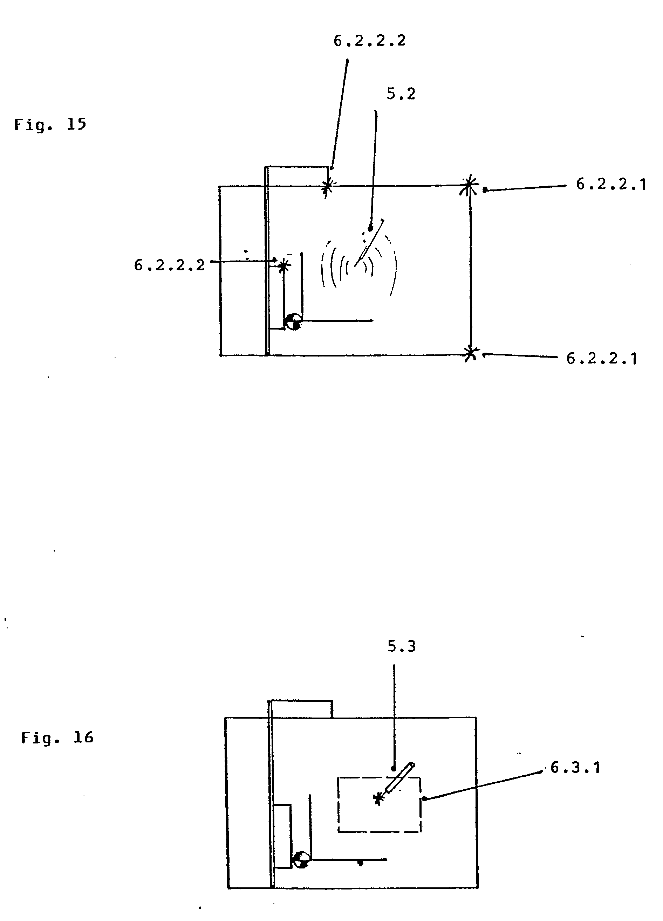

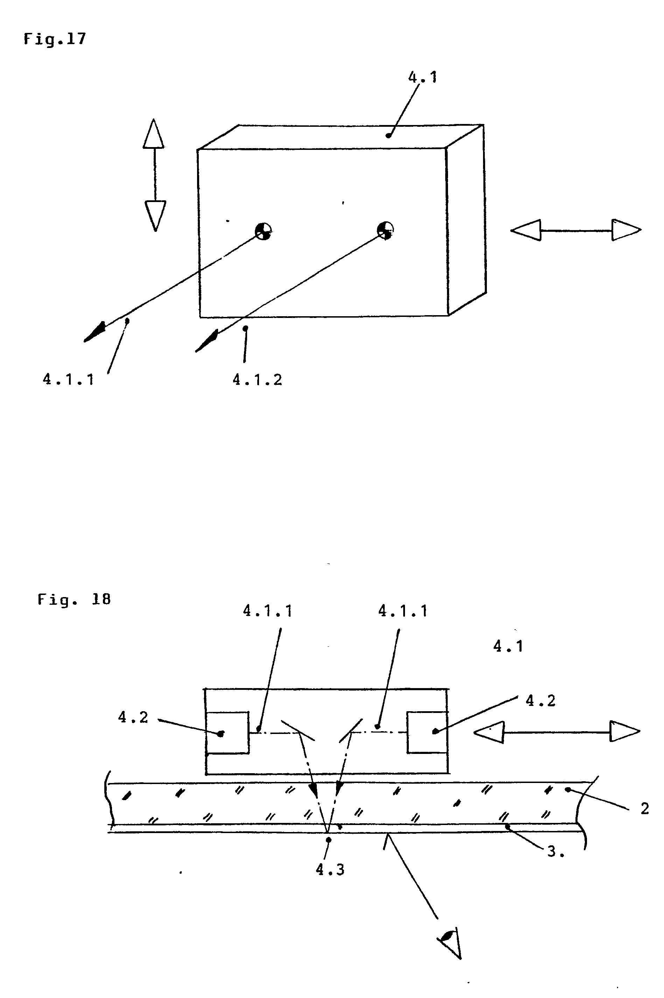

Fig. 6
einen Schnitt durch eine alternative Ausgestaltung der Zeichenplatte,
Fig. 7
eine Ausführungsmöglichkeit der Zeichenfläche in einer Schnittansicht,
Fig. 8 bis 12
in Schnittansichten alternative Ausgestaltungen der Zeichenfläche zu der Ausführungsform nach Fig. 7,
Fig. 13 und 14
in Schnittansichten alternative Ausgestaltungen der Zeichenplatte zu den Ausführungsformen nach den Fig. 5 und 6,
Fig. 15
eine Vorderansicht eines mit einem akustischen Meßsystem ausgerüsteten Reißbrettes,
Fig. 16
in einer Ansicht wie in Fig. 15 ein Reißbrett mit einem optischen Meßsystem,
Fig. 17
eine perspektivische Ansicht eines in einem Koordinatensystem bewegbaren Plotkopfs,
Fig. 18
in einer Schnittansicht die Zuordnung eines mit mehreren Strahlungsquellen versehenen Plotkopfs zur Zeichenplatte und
Fig. 19
in einer Schnittansicht wie in Fig. 18 die exakte Einstellung der Optik eines Plotkopfs gegenüber dem Zeichenplattenkörper mittels einer Luftlagerung.

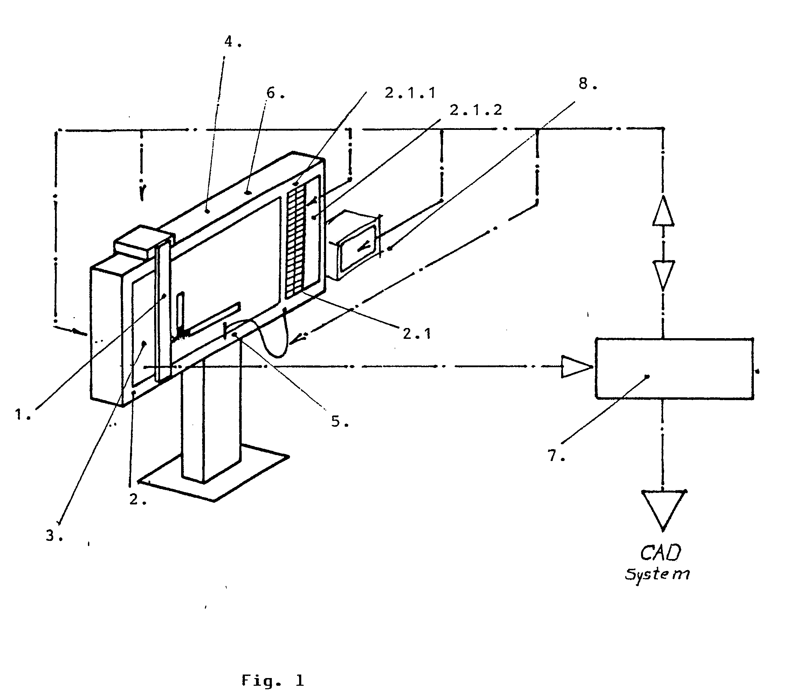

In Fig. 1 ist eine Ausführungsform des erfindungsgemäßen Reißbrettes dargestellt, das aus einer Zeichenmaschine 1, einer Zeichenplatte 2, einer Zeichenfläche 3, einem innenliegenden Plotter 4, einem Stift 5 und einem zugeordneten Meßsystem 6 besteht, das die Vermessung des durch den Stift 5 zurückgelegten Weges vermittelt. Die so gewonnenen Informationen werden durch einen zugeordneten Rechner 7 verarbeitet, der damit eine exakte rechnerinterne Darstellung einer auf der Zeichenfläche 3 von Hand oder mit Hilfe der Zeichenmaschine entworfenen Skizze schafft.

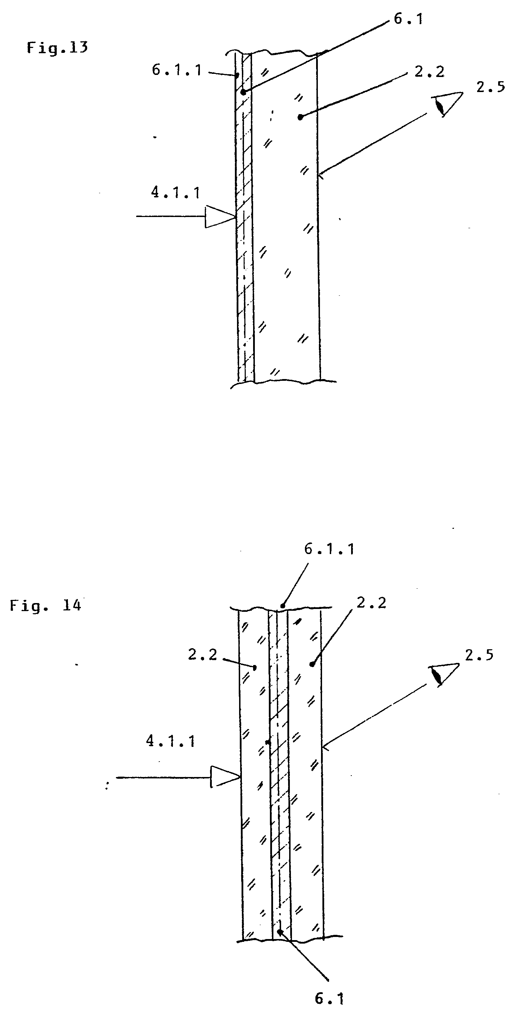

Relevante Teile der rechnerinternen Darstellungen werden über den Plotter 4 von hinten gegen die Zeichenfläche 3 geplottet. Dabei liegt die exakte rechnerinterne Darstellung neben der Skizze quasi parallaxfrei vor den mit 2.5 (in den Fig. 4 und 7 bis 14) bezeichneten Augen eines Betrachters.

Der dem Reißbrett zugeordnete graphische Bildschirm 8 dient zur Information über anderweitig erstellte Daten.

Ein Benutzer findet das gewohnte Bild eines Reißbrettes vor und kann mit den ihm vertrauten Sehgewohnheiten einen Entwurf erarbeiten.

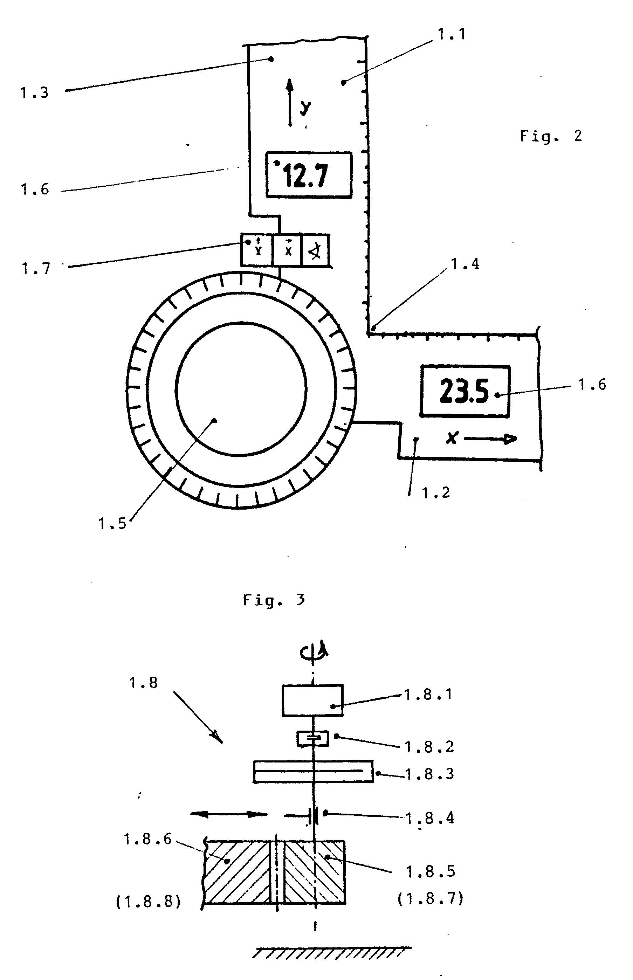

Fig. 2 zeigt Einzelheiten der Zeichenmaschine 1. Sie weist ein Lineal 1.1 auf, dessen X-Schenkel 1.2 und Y-Schenkel 1.3 eine Ecke 1.4 bilden, die einen temporären Ursprung während des Zeichnens und Skizzierens bildet.

Das Lineal 1.1 ist mit einem Zeichenkopf 1.5 verbunden. Der Zeichenkopf 1.5 ist in bekannter Weise als Laufwagensystem ausgebildet, wobei die üblichen Meßsysteme für die augenblickliche Lage der Ecke 1.4 in Winkellage und x,y-Koordinaten integriert sind.

Weiter sind Displays 1.6 vorhanden, auf denen Winkellagen und x, y-Koordinaten darstellbar sind. Diese Darstellungen beziehen sich nicht nur auf die augenblickliche Lage des Zeichenkopfs 1.5, sondern können auch Koordinaten anzeigen, die durch den Stift 5 in der Zeichnung oder Skizze initiiert sind.

Die Zeichenmaschine 1 ist mit drei Hilfsantrieben ausgerüstet, mit denen eine selbsttätige Feinpositionierung der Winkellage bzw. der x,y-Koordinaten erreicht werden kann.

So besteht die Möglichkeit, mit dem Stift 5 einen bestimmten Punkt auf der Zeichenfläche 3 zu markieren. Dabei wird dessen Position von Hand grob angefahren und die exakte Feinpositionierung mittels der Hilfsantriebe 1.8 erreicht, wobei letztere durch Entriegelungstasten 1.7 aktivier- bzw. deaktivierbar sind.

Den prinzipiellen Aufbau eines Hilfsantriebes 1.8 zeigt Fig. 3. Er besteht aus einem Scheibenläufermotor 1.8.1, einem Getriebe 1.8.2, einer Kupplung 1.8.3, einer Bremse 1.8.4, einem Ritzel 1.8.5 und einer Zahnstange 1.8.6. Anstelle des Ritzels 1.8.5 und der Zahnstange 1.8.6 können auch ein Reibrad 1.8.7 und eine Gegenreibfläche 1.8.8 vorhanden sein.

Das Meßsystem 6 dient der Geschwindigkeitsmessung des Zeichenkopfs 1.5 und koppelt in Zielpunktnähe die Kupplung 1.8.3 ein. Dadurch wird der natürliche Bewegungsablauf der linken Hand einer Bedienungsperson am Zeichenkopf 1.5 unterstützt. Die Bremse 1.8.4 dient dazu, eine erreichte Position zu sichern.

Fig. 4 zeigt die prinzipielle Zuordnung eines Plotkopfes 4.1 des Plotters 4 zur Zeichenplatte 2 und zu der auf letzterer aufgenommenen Zeichenfläche 3. Ferner ist das Meßsystem 6 dargestellt, das als Digitalisiergitter 6.1 ausgebildet ist.

Die Zeichenplatte 2 und damit die Zeichenfläche 3 ist um eine Achse leicht gekrümmt, wie bei 2.4 angedeutet.

Die Zeichenplatte 2 ist rechtsseitig mit einem Menüfeld 2.1 versehen, das aus einem statischen Menüfeld 2.1.1 und aus einem dynamischen Menüfeld 2.1.2 besteht. Das dynamische Menüfeld 2.1.2 kann vorzugsweise aus einem berührungsempfindlichen graphischen Bildschirm bestehen.

Die Zeichenplatte 2 ist in ihrem Zeichenplattenkörper 2.2 strahlungsdurchlässig. Dies zeigen die Ausführungsformen nach den Fig. 5 und 6.

Wie Fig. 5 zeigt, kann der Zeichenplattenkörper 2.2 mit einer bei Verwendung stärkster Strahlungsarten vorteilhaften Schutzschicht 2.3 aus gut wärmeleitendem Metall versehen sein. Die Elemente eines Digitalisiergitters 6.1 können dann in Kanälen 2.3.1 dieser Schutzschicht aufgenommen sein.

Eine andere Ausführungsform des Zeichenplattenkörpers 2.2 zeigt Fig. 6, bei dem die Oberfläche 2.2.1 rauh ausgebildet ist. Dadurch wird ein relativ schmaler Einstrahlkegel 2.2.2 zu einem Ausstrahlkegel 2.2.3 mit relativ großem Öffnungswinkel. Demgemäß ist der Einstrahlwinkel kleiner als der Ausstrahlwinkel.

Höchste Empfindlichkeit einer Thermoschicht werden erreicht, wenn diese unmittelbar auf die rauhe Oberfläche 2.2.1 aufgetragen ist. Eine solche Thermoschicht 3.4 ist sowohl entfernbar als auch ergänzbar. Damit können beispielsweise durch zusätzlichen Auftrag ganze Skizzenbereiche gelöscht und wieder beplottet und bezeichnet werden.

Im allgemeinen ist die Zeichenfläche 3 ein von der Zeichenplatte 2 separates Gebilde. Den prinzipiellen Aufbau einer solchen Zeichenfläche zeigt Fig. 7. Die Zeichenfläche 3 besteht dabei aus papier- oder folienartig ausgebildetem Trägermaterial 3.1, in das oder auf das eine strahlungsempfindliche Präparation 3.3 ein- bzw. aufgebracht ist.

Durch Bestrahlung gemäß Pfeil 4.1.1 auf der vom Auge 2.5 eines Betrachters abgewandten Seite wird ein sichtbarer Farbumschlag erreicht.

Fig. 8 zeigt einen Aufbau einer Zeichenfläche, bei dem auf der Einstrahlseite, also auf der vom Betrachter abgewandten Seite des Trägermaterials 3.1, eine thermoempfindliche Schicht 3.4 angeordnet ist.

Fig. 9 zeigt einen Zeichenflächenaufbau, bei dem eine thermoempfindliche Schicht 3.4 in Einstrahlrichtung oben liegt, wobei unter dem Trägermaterial 3.1 eine absorbierende Schicht 3.5 angeordnet ist.

Fig. 10 zeigt die Anordnung einer absorbierenden Schicht 3.5 und einer thermoempfindlichen Schicht 3.4 unter dem Trägermaterial 3.1. Die Oberfläche des Trägermaterials entspricht der Markierung 3.2 in Fig. 7.

Fig. 11 zeigt eine Umkehrung des Aufbaus nach Fig. 10, wobei zwischen der thermoempfindlichen Schicht 3.4 und dem Trägermaterial 3.1 die absorbierende Schicht 3.5 angeordnet ist.

In Fig. 12 ist ein Trägermaterial 3.1.1 dargestellt, das vorzugsweise gelbfilterartig aufgebaut ist und an der Unterseite eine photoempfindliche direkt entwickelnde Schicht 3.6 aufweist, die durch UV-Strahlung entwickelt wird.

Die Fig. 13 und 14 zeigen alternative Ausführungsformen des Meßsystems 6 in Schnitten durch die Zeichenplatte 2. Es handelt sich dabei um ein Digitalisiergitter 6.1, das mit einer Vergußmasse 6.1.1 auf dem Zeichenplattenkörper 2.2 befestigt ist. Fig. 13 zeigt, daß die Vergußmasse 6.1.1 eine ebene Fläche aufweist. Bei der Ausführungsform nach Fig. 14 hingegen liegt die Vergußmasse 6.1.1 mit dem Digitalisiergitter 6.1 im Inneren des Zeichenplattenkörpers 2.2.

Ein dem Digitalisiergitter 6.1 zugeordneter elektronischer Stift 5.1 (Fig. 4) nimmt in bekannter Weise Impulse auf, die der Positionsbestimmung der Stiftspitze dienen.

Bei der in Fig. 15 veranschaulichten Ausführungsform des Meßsystems 6 handelt es sich um ein akustisches Meßsystem. Bei bekannten Systemen dieser Art werden durch zwei oder mehrere Mikrophone 6.2.2.2 unhörbare Schallsignale eines akustischen Stiftes 5.2 aufgefangen. Die Besonderheit der vorliegenden Ausführung besteht darin, daß die Mikrophone 6.2.2.2 mit der Zeichenmaschine 1 verbunden sind und somit mit dieser mitbewegt werden. Die ständige Veränderung der Mikrophongeometrie wird bei diesem System zurückgerechnet und an bevorzugten Stellen sind fest installierte Mikrophone 6.2.2.1 angeordnet.

Eine weitere vorteilhafte Ausführungsform eines Meßsystems 6 ist ein optisches Meßsystem nach Fig. 16, bei dem von einer vor dem Reißbrett angeordneten Kamera ein Bild der Zeichenfläche 3 aufgenommen wird. Es ist hinreichend, wenn ein Bildfenster 6.3.1 über die Zeichenfläche bewegt wird, um damit die Auflösung zu erhöhen. Das Bildfenster folgt dabei dem leuchtenden Stift 5.3, wobei durch permanente Rechnung die wahre Position der leuchtenden Stiftspitze gewonnen wird.

Der in Fig. 17 in einer perspektivischen Ansicht gezeigte Plotkopf 4.1 ist mit einer einen Plotstrahl 4.1.1 und mit einer einen Markierungsstrahl 4.1.2 aussendenden Strahlenquelle versehen.

Bei dem in Fig. 18 gezeigten Plotkopf 4.1 dienen als Strahlungsquellen Laserdioden 4.2, die auf dem Plotkopf so angeordnet sind, daß die von den Dioden ausgehenden Strahlen in einem in der Nähe einer strahlungsempfindlichen Schicht 3.4 der Zeichenfläche 3 liegenden Fokus 4.3 zusammenlaufen.

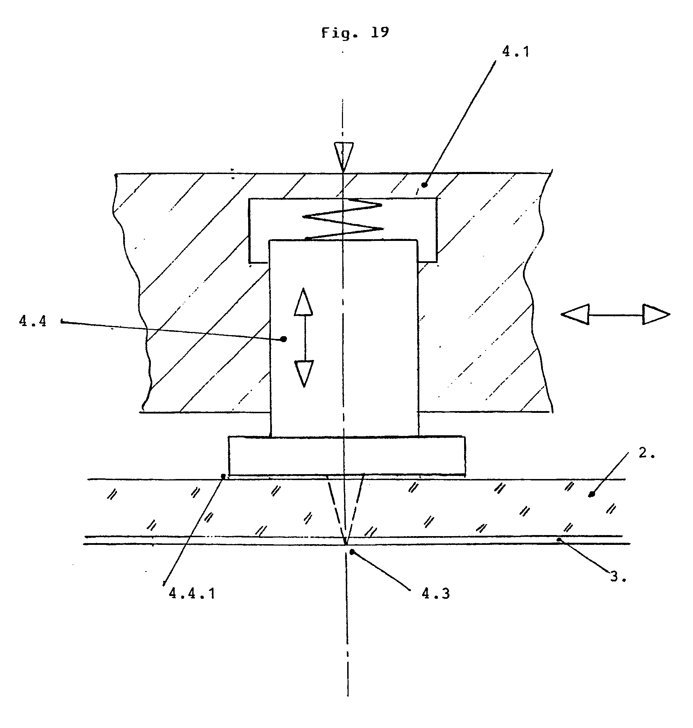

Schließlich ist in Fig. 19 eine bevorzugte Anordnung des Plotkopfes 4.1 und seiner Optik 4.4 zur Zeichenplatte 2 dargestellt. Die notwendige Präzision der Lage des Fokus 4.3 in der Zeichenfläche 3 wird dadurch erreicht, daß die Optik 4.4 über eine Luftlagerung 4.4.1 bekannter Art gegen die Oberfläche des Zeichenplattenkörpers 2.2 abgestützt ist. Damit kann der Plotter 4 baulich leicht ausgeführt werden.

**Ansprüche**

1. Verfahren zum Erstellen von Entwürfen unter Verwendung eines intelligenten Reißbrettes, mit einer Zeichenmaschine (1), einer transparenten Zeichenplatte (2), einer Zeichenfläche (3), einem Plotter (4), einem Stift (5), einem Meßsystem (6) und einem Rechner (7) sowie gegebenenfalls einem Bildschirm (8), dadurch gekennzeichnet,
daß beim Entwerfen einer Skizze mittels des Stiftes (5) auf der Vorderseite der auf der von einem plan auf der transparenten Zeichenplatte (2) aufgenommenen zeichnungstragenden Medium, wie Transparentpapier, gebildeten Zeichenfläche (3) die Spur des Stiftes von dem Meßsystem (6) aufgenommen und an den eine rechnerinterne Darstellung der Skizze erzeugenden Rechner (7) weitergeleitet sowie die rechnerinterne Darstellung der Skizze mittels eines von dem Plotter (4) erzeugten Plotstrahls von rückwärts auf der Rückseite der Zeichenfläche (3) aufgeplottet wird und durch diese hindurch ohne merkbare Parallaxe neben der durch den Stift auf der Vorderseite der Zeichenfläche erzeugte Skizze von vorn sichtbar ist.

2. Intelligentes Reißbrett zum Durchführen des Verfahrens nach Anspruch 1, bestehend aus einer Zeichen maschine (1), einer transparenten Zeichenplatte (2), einer Zeichenfläche (3), einem Plotter (4), einem Stift (5), einem Meßsystem (6) und einem Rechner (7) sowie gegebenenfalls einem Bildschirm (8), und Wirkorganen, wie Entriegelungstasten (1.7), Stift aus (5), Menüfeld (2.1), Plotter (4) und dgl., die über das Meßsystem (6) und den Rechner (7) logisch miteinander verbunden sind,
dadurch gekennzeichnet, daß sich der Plotter (4), vom Betrachter aus gesehen, in an sich bekannter Weise hinter der von einen Zeichnungstragenden Medium gebildeten Zeichenfläche (3), die plan auf der dem Benutzer zugewandten Seite der Zeichenplatte (2) aufgenommen ist, befindet und der Plotstrahl (4.1.1) von hinten gegen die Zeichenfläche (3) gerichtet ist, so daß ein Plot auf der Rückseite der Zeichenfläche ohne merkbare Parallaxe neben der durch den Stift (5) auf der Vorderseite der Zeichenfläche erzeugten Skizze liegt und von vorn sichtbar ist.

3. Reißbrett nach Anspruch 2, dadurch gekennzeichnet, daß die Zeichenmaschine (1) ein Lineal (1.1) mit einem X-Schenkel (1.2) und einem Y-Schenkel (1.3) besitzt, die eine den Ursprung eines temporären Koordinatensystems darstellende Ecke (1.4) bilden.

4. Reißbrett nach Anspruch 2, gekennzeichnet durch drei Hilfsantriebe (1.8) für das exakte Fangen einer x,y- und Winkelposition.

5. Reißbrett nach Anspruch 4, dadurch gekennzeichnet, daß jeder der Hilfsantriebe (1.8) aus einem Scheibenläufermotor (1.8.1), einem Getriebe (1.8.2), einer Kupplung (1.8.3), einer Bremse (1.8.4), einem Ritzel (1.8.5) und einer Zahnstange (1.8.6) bzw. einem Reibrad (1.8.7) und einer Reibfläche (1.8.8) besteht.

6. Reißbrett nach Anspruch 2, dadurch gekennzeichnet, daß neben dem allgemeinen Meßsystem (6), die Zeichenmaschine (1) einen Zeichenkopf (1.5) mit an sich bekanntem Meßsystem für die x,y- und Winkelposition ausgerüstet ist, enthält.

7. Reißbrett nach Anspruch 6, dadurch gekennzeichnet, daß dem Zeichenkopf (1.5) Entriegelungstasten (1.7) zugeordnet sind.

8. Reißbrett nach Anspruch 2, dadurch gekennzeichnet, daß am Rande der Zeichenplatte (2), vorzugsweise auf deren rechter Seite, ein Menüfeld (2.1) mit einem dynamischen Teil (2.1.2) aus einem berührungsempfindlichen graphischen Bildschirm angeordnet ist.

9. Reißbrett nach Anspruch 2 oder 8, dadurch gekennzeichnet, daß die Zeichenplatte (2) aus einem strahlungsdurchlässigen Zeichenplattenkörper (2.2) besteht.

10. Reißbrett nach Anspruch 9, dadurch gekennzeichnet, daß der Zeichenplattenkörper (2.2) mit einer strahlungsundurchlässigen, jedoch wärmeleitenden Schutzschicht (2.3) versehen ist.

11. Reißbrett nach Anspruch 10, dadurch gekennzeichnet, daß die Schutzschicht (2.3) auf der vom Plotter (4) abgewandten Seite mit Kanälen (2.3.1) versehen und in letzteren ein Digitalisiergitter (6.1) aufgenommen ist.

12. Reißbrett nach einem oder mehreren der Ansprüche 2 und 8 bis 11, dadurch gekennzeichnet, daß die dem Plotter (4) abgewandte Seite (2.2.1) des Zeichenplattenkörpers (2.2) rauh ist.

13. Reißbrett nach einem oder mehreren der Ansprüche 2 und 8 bis 12, dadurch gekennzeichnet, daß die Zeichenplatte (2) eine geringfügige, einachsige Zeichenplattenkrümmung (2.4) aufweist.

14. Reißbrett nach einem oder mehreren der Ansprüche 2 und 8 bis 13, dadurch gekennzeichnet, daß die Zeichenplatte (2) an ihrer dem Betrachter zugewandten Seite direkt eine Zeichenfläche (3) trägt, die einen farbstoffartigen Charakter mit einer strahlungsempfindlichen entfernbaren bzw. ergänzbaren Präparation (3.3) aufweist.

15. Reißbrett nach Anspruch 2, dadurch gekennzeichnet, daß die Zeichenfläche (3) aus einem Trägermaterial (3.1) papier- oder folienartiger Ausprägung mit einer auf oder in dieses auf- oder eingebrachten strahlungsempfindlichen Präparation (3.3) besteht.

16. Reißbrett nach Anspruch 15, dadurch gekennzeichnet, daß die Zeichenfläche (3) in Plotstrahlrichtung (4.1.1) gesehen mit einer absorbierenden Schicht (3.5) und danach mit einer thermoempfindlichen Schicht (3.4) versehen ist.

17. Reißbrett nach Anspruch 16, dadurch gekennzeichnet, daß die Zeichenfläche (3) aus transparentem, folien artig und filterartig, insbesondere gelbfilterartig, aufgebautem Trägermaterial (3.1.1) besteht, wobei in Plotstrahlrichtung (4.1.1) gesehen zuerst eine photoempfindliche direkt entwickelnde Schicht (3.6) liegt.

18. Reißbrett nach Anspruch 2, gekennzeichnet durch die Verwendung eines an sich bekannten Digitalisiergitters (6.1) als Meßsystem (6.1), welches auf dem Zeichenplattenkörper (2.2) angeordnet ist und in eine Verußmasse mit absolut ebener Oberfläche eingebettet ist.

19. Reißbrett nach Anspruch 2 gekennzeichnet durch die Verwendung eines an sich bekannten akustisch arbeitenden Meßsystems mit mehreren Mikrophonen (6.2.2.2), wobei wenigstens ein Mikrophon (6.2.2.2) mit der beweglichen Zeichenmaschine (1) verbunden ist.

20. Reißbrett nach Anspruch 2, gekennzeichnet durch die Verwendung eines optischen Meßsystems mit einem leuchtenden Stift (5.3), der eine mit der Präparation (3.3) der Zeichenfläche (3) nicht reagierende Lichtart aussendet.

21. Reißbrett nach Anspruch 2, dadurch gekennzeichnet, daß der Plotkopf (4.1) einen Plotstrahl (4.1.1) und einen Markierungsstrahl (4.1.2) besitzt.

**22.** Reißbrett nach Anspruch 21, dadurch gekennzeichnet, daß als Lichtquelle eine UV-Strahlenquelle dient und daß diese Lichtquelle auf dem Plotkopf (4.1) angeordnet ist.

**23.** Reißbrett nach Anspruch 21 oder 22, dadurch gekennzeichnet, daß als Lichtquelle Laserdioden (4.2) dienen und daß diese auf dem Plotkopf (4.1) so angeordnet sind, daß die von den Laserdioden ausgehenden Strahlen in einem Fokus (4.3) zusammenlaufen, der in der Nähe der strahlungsempfindlichen Schicht (3.4) liegt.

**24.** Reißbrett nach einem oder mehreren der Ansprüche 21 bis 23, dadurch gekennzeichnet, daß eine Optik (4.4) des Plotkopfs (4.1) gegenüber dem Zeichenplattenkörper (2.2) luftgelagert ist.


**Claims**

**1.** Method for the drawing-up of design with the use of an intelligent drawing board, with a drafting machine (1), a transparent drawing plate (2), a drawing surface (3), a plotter (4), a stylus (5), a measuring system (6) and a computer (7) as well as in a given case an image screen (8), characterised thereby, that during the drafting of a sketch by means of the stylus (5) on the front side of the drawing surface (3) formed by a medium, such as transparent paper, carrying the drawing and received planarly on the transparent drawing plate (2), the track of the stylus is picked up by the measuring system (6) and passed on to the computer (7), which internally reproduces a representation of the sketch, as well as the representation of the sketch internally of the computer is brought to an image from the rear on the rear side of the drawing surface (3) by means of a plotter beam produced by the plotter (4) and made visible through the drawing surface (3) from the front without noticeable parallax beside the sketch produced by the stylus on the front side of the drawing surface.

**2.** Intelligent drawing board for the performance of the method according to claim 1 and consisting of a drafting machine (1), a transparent drawing plate (2), a drawing surface (3), a plotter (4), a stylus (5), a measuring system (6) and a computer (7) as well as in a given case an image screen (8) and of effective organs, such as unlocking keys (1, 7), stylus (5), menu field (2, 1), plotter (4) and the like, which are logically interlinked by way of the measuring system (6) and the computer (7), characterised thereby, that the plotter (4) is disposed, as seen by the observer, in known manner behind the drawing surface (3), which is formed by a medium carrying the drawing and received planarly on that side of the drawing surface (3), which faces the user, and the plotter beam (4.1.1) is directed towards the drawing surface (3) from the rear so that a plot lies on the rear side of the drawing surface without noticeable parallax beside the sketch produced by the stylus (5) on the front side of the drawing surface and is visible from the front.

**3.** Drawing board according to claim 2, characterised thereby, that the drafting machine (1) possesses a straight-edge (1.1) with an X-limb (1.2) and a Y-limb (1.3), which form a corner (1.4) representing the origin of a temporary coordinate system.

**4.** Drawing board according to claim 2, characterised by three auxiliary drives (1.8) for the exact seizing of an x,y and angular position.

**5.** Drawing board according to claim 4, characterised thereby, that each of the auxiliary drives (1.8) consists of a disc rotor motor (1.8.1), a gear (1.8.2), a clutch (1.8.3), a brake (1.8.4), a pinion (1.8.5) and either a toothed rack (1.8.6) or a friction wheel (1.8.7) and a friction surface (1.8.8).

**6.** Drawing board according to claim 2, characterised thereby, that apart from the general measuring system (6), the drafting machine (1) contains a drafting head (1.5) with an in itself known measuring system for the x,y and angular position.

**7.** Drawing board according to claim 6, characterised thereby, that unlocking keys (1.7) are associated with the drafting head (1.5).

**8.** Drawing board according to claim 2, characterised thereby, that a menu field (2.1) with a dynamic part (2.1.2) of a touch-sensitive graphic image screen is arranged at the edge of the drawing plate (2), preferably at the right-hand side thereof.

**9.** Drawing board according to claim 2 or 8, characterised thereby, that the drawing plate (2) consists of a drawing plate body (2.2) permeable by radiation.

**10.** Drawing board according to claim 9, characterised thereby, that the drawing plate body (2.2) is provided with a protective layer (2.3), which is impermeable by radiation, yet thermally conductive.

11. Drawing board according to claim 10, characterised thereby, that the protective layer (2.3) is provided with channels (2.3.1) on the side remote from the plotter (4) and a digitalising grid (6.1) is received in the channels.

12. Drawing board accoring to one or more of the claims 2 and 8 to 11, characterised thereby, that that side (2.2.1) of the drawing plate body (2.2), which is remote from the plotter (4), is rough.

13. Drawing board according to one or more of the claims 2 and 8 to 12, characterised thereby, that the drawing plate (2) displays a slight uniaxial drawing plate curvature (2.4).

14. Drawing board according to one or more of the claims 2 and 8 to 13, characterised thereby, that the drawing plate (2) at its side facing the observer directly carries a drawing surface (3), which displays a pigment-like character with a removable or augmentable radiation-sensitive preparation (3.3).

15. Drawing board according to claim 2, characterised thereby, that the drawing surface (3) consists of a carrier material (3.1) of paper-like or foil-like character with a radiation-sensitive preparation (3.3) applied thereon or introduced therein.

16. Drawing board according to claim 15, characterised thereby, that the drawing surface (3), as seen in plotter beam direction (4.1.1), is provided with an absorbing layer (3.5) and thereafter with a thermo-sensitive layer (3.4).

17. Drawing board according to claim 16, characterised thereby, that the drawing surface (3) consists of transparent carrier material (3.1.1) built up in the manner of a foil and of a filter, in particular yellow filter, wherein a photo-sensitive, directly developing layer (3.6) lies first as seen in plotter beam direction (4.1.1).

18. Drawing board according to claim 2, characterised by the use of an in itself known digitalising grid (6.1) as measuring system (6.1), which is arranged on the drawing plate body (2.2) and embedded in an encapsulating mass with absolutely planar surface.

19. Drawing board according to claim 2, characterised by the use of an in itself known acoustically operating measuring system with several microphones (6.2.2.2), wherein at least one microphone (6.2.2.2) is connected with the movable drafting machine (1).

20. Drawing board according to claim 2, characterised by the use of an optical measuring system with a luminous stylus (5.3) which emits a kind of light not reacting with the preparation (3.3) of the drawing surface (3).

21. Drawing board according to claim 2, characterised thereby, that the plotter head (4.1) possesses a plotter beam (4.1.1) and a marking beam (4.1.2).

22. Drawing board according to claim 21, characterised thereby, that an ultra-violet light source serves as light source and that this light source is arranged on the plotter head (4.1).

23. Drawing board according to claim 21 or 22, characterised thereby, that laser diodes (4.2) serve as light source and that these are so arranged on the plotter head (4.1) that the beams emanating from the laser diodes converge on a focal point (4.3), which lies in the proximity of the radiation-sensitive layer (3.4).

24. Drawing board according to one or more of the claims 21 to 23, characterised thereby, that an optical system (4.4) of the plotter head (4.1) is air-suspended relative to the drawing plate body (2.2).

**Revendications**

1. Procédé d'élaboration de maquettes par emploi d'une table à dessin intelligente avec une machine à dessiner (1), une plaque à dessin transparente (2), une surface de dessin (3), un traceur (4), un crayon (5), un système de mesure (6) et un calculateur (7) ainsi que, le cas échéant, un écran (8) caractérisé en ce que par ébauche d'une esquisse au moyen du crayon (5) sur le côté supérieur d'un plan de la plaque à dessiner transparente (2) sur un médium porteur de dessin tel que du papier transparent, sur le côté dessiné (3) la trace du crayon est détectée par le système de mesure (6) et une représentation numérique de l'esquisse est fournie au calculateur (7) de sorte que la représentation numérique de l'esquisse soit projetée au moyen du traceur (4) émettant des rayons projetés de l'arrière vers la face arrière de la surface à dessin (3), sans parallaxe notable pour la reproduction, au voisinage du crayon sur le côté avant de la surface à dessin sur laquelle est produite l'esquisse, d'une manière sûre.

2. Table à dessin intelligente pour la mise en oeuvre du procédé selon la revendication 1 comprenant une machine à dessiner (1), une plaque à dessin transparente (2), une surface de dessin (3), un traceur (4), un crayon (5), un système de mesure (6), un calculateur (7), éventuellement un écran (8) et des organes d'action tels que des palpeurs de déverrouillage (1.7), un crayon (5), un champ de menu (2.1), un traceur (4) ou analogue, le système de mesure (6) et le calculateur (7) étant logiquement reliés, caractérisé en ce que le traceur (4) vu de l'extérieur par l'observateur, est, d'une manière connue derrière le médium portant le dessin sur la surface de dessin (3), représenté du côté de la plaque (2) tourné vers l'utilisateur, le rayonnement du traceur (4.1.1.) étant dirigé de l'arrière contre la surface de dessin (3) de sorte qu'un tracé se forme sans parallaxe notable près du crayon (5) sur le côté avant de la surface de dessin où l'esquisse est produite et d'une manière sûre.

3. Table à dessin selon la revendication 2, caractérisée en ce que la machine à dessiner (1), consiste en une règle (1.1) avec aile X (1.2) et une aile Y (1.3) qui représentent dans l'angle (1.4) la source d'un système de coordonnées temporaires.

4. Table à dessin selon la revendication 2 caractérisée en ce que par trois commandes auxiliaires (1.8) la position des axes X Y et la position angulaire sont exactement saisies.

5. Table à dessin selon la revendication 4, caractérisée en ce que chaque commande auxiliaire (1.8) comprend un moteur à un endroit (1.8.1), un engrenage (1.8.2), un couplage (1.8.3), un frein (1.8.4), un pignon (1.8.5), une crémaillère (1.8.6) respectivement, une roue de friction (1.8.7) et une surface de friction (1.8.8).

6. Table à dessin selon la revendication 2 caractérisée en ce que, au voisinage du système de mesure général (6), la machine à dessiner (1) comporte une tête de dessin (1.5) avec un système de mesure connu déterminant les positions X, Y et angulaire.

7. Table à dessin selon la revendication 6 caractérisée en ce que des palpeurs de déverrouillage (1.7) sont montés sur la tête de dessin (1.5).

8. Table à dessin selon la revendication 2 caractérisée en ce que, au bord de la plaque à dessin (2), de préférence du côté droit est disposé un champ de menu (2.1) avec une partie dynamique (2.1.2) en dehors d'un écran graphique sensible à l'effleurement.

9. Table à dessin selon la revendication 2 ou 8 caractérisée en ce que la plaque à dessin (2) comprend un corps de plaque à dessin (2.2) laissant passer le rayonnement.

10. Table à dessin selon la revendication 9 caractérisée en ce que le corps de la plaque à dessin (2.2) est revêtue d'une couche de protection opaque au rayonnement mais conductrice de la chaleur (2.3).

11. Table à dessin selon la revendication 10, caractérisée en ce que la couche de protection (2.3) dont la face qui est tournée vers le traceur (4) est pourvue de canaux (2.3.1), dans cette dernière étant prévu un convertisseur numérique (6.1).

12. Table à dessin selon une ou plusieurs des revendications 2 et 8 à 11 caractérisée en ce que la face du corps (2.2.1) de la plaque à dessin (2.2) tournée vers le traceur (4) est rugueuse.

13. Table à dessin selon une ou plusieurs des revendications 2 et 8 à 12 caractérisée en ce que la plaque à dessin (2) consiste en une plaque courbe uniaxe annulaire (2.4).

14. Table à dessin selon une ou plusieurs des revendications 2 et 8 à 13 caractérisée en ce que la plaque à dessin (2), du côté où se trouve l'observateur porte une surface de dessin (3) qui à un caractère de réponse à la couleur sensible au rayonnement et qui consiste en une préparation (3.3) par élimination ou addition.

15. Table à dessin selon la revendication 2, caractérisée en ce que la surface de dessin (3) comprend sur un substrat (3.1) de papier ou en forme de feuille avec une ou plusieurs préparations (3.3) sensibles au rayonnement.

16. Table à dessin selon la revendication 15, caractérisée en ce que la surface de dessin (3) dans la direction de rayonnement du traceur (4.1.1) est revêtue d'une couche absorbante (3.5) et par une couche (3.4) thermosensible.

17. Table à dessin selon la revendication 16, caractérisée en ce que la surface de dessin (3) consiste en une feuille ou filtre transparent, en particulier un filtre jaune, constituant le matériau porteur (3.1.1.), de sorte que dans la direction des rayons du traceur (4.1.1.) s'étende d'abord une couche de recouvrement (3.6) directe photosensible.

18. Table à dessin selon la revendication 2 caractérisée par l'utilisation d'un convertisseur numérique connu (6.1) en tant que système de mesure (6.1) qui est disposé sur le corps de la plaque à dessin (2.2) et qui est intégré à la surface supérieure absolument plane.

19. Table à dessin selon la revendication 2, caractérisée par l'utilisation d'un système de mesure acoustique connu travaillant en système de mesure avec une pluralité de microphones (6.2.2.2) et dans lequel au moins un microphone (6.2.2.2) est lié au mouvement de la machine à dessin (1).

20. Table à dessin selon la revendication 2 caractérisée par l'utilisation d'un système de mesure optique avec un crayon lumineux (5.3) qui avec la préparation (3.3) de la surface de dessin (3) ne réagit pas à l'émission de la lumière.

21. Table à dessin selon la revendication 2 caractérisée en ce que la tête (4.1) du traceur émet un rayon traceur (4.1.1.) et un rayon de marquage (4.1.2).

22. Table à dessin selon la revendication 21 caractérisée en ce que l'on utilise comme source lumineuse une source UV et que ladite source est disposée sur la tête (4.1) du traceur.

23. Table à dessin selon la revendication 21 ou 22 caractérisée en ce que des diodes laser (4.2) sont utilisés comme sources lumineuses et que celles-ci sont disposées sur la tête du traceur (4.1) de sorte que les rayons des diodes soient focalisés dans le voisinage de la couche (3.4) sensible au rayonnement.

24. Table à dessin selon une ou plusieurs revendication 21 à 23 caractérisée en ce qu'une optique (4.4) de la tête de traceur (4.1) repose contre le corps (2.2.) de la plaque à dessin.

Fig. 1

Fig. 2

Fig. 3

Fig. 4

2.4

6.

2.5

4.

5.1

2.

3.

Fig. 5

Fig. 6

2.3.1

2.2.2

$\alpha$

$\beta$

2.2.3

6.1

2.3

2.2.1

2.

2.2

Fig. 7

Fig. 8

Fig. 9

Fig. 10

Fig. 11

Fig. 12

Fig.13

6.1

6.1.1

2.2

2.5

4.1.1

Fig. 14

6.1.1

2.2

2.2

2.5

4.1.1

6.1

Fig. 15

6.2.2.2

5.2

6.2.2.1

6.2.2.2

6.2.2.1

Fig. 16

5.3

6.3.1

Fig.17

4.1

4.1.1

4.1.2

Fig. 18

4.1.1          4.1.1

4.1

4.2          4.2

2

4.3          3.

Fig. 19